# EUROPÄISCHE PATENTSCHRIFT

(11) **EP 3 631 677 B1**
(45) Veröffentlichungstag und Bekanntmachung des Hinweises auf die Patenterteilung: **23.07.2025**
(21) Anmeldenummer: 18731355.6
(22) Anmeldetag: 17.05.2018
(51) Int. Cl.: G06V 20/58, G06V 10/82, G06V 10/25

(54) **VERFAHREN ZUR ERKENNUNG VON OBJEKTEN IN EINEM BILD EINER KAMERA**
METHOD FOR DETECTING OBJECTS IN AN IMAGE OF A CAMERA
PROCÉDÉ DE DÉTECTION D'OBJETS DANS UNE IMAGE D'UNE CAMERA

(30) Priorität: 23.05.2017 DE 102017208718
(43) Veröffentlichungstag der Anmeldung: 08.04.2020
(73) Patentinhaber: Continental Autonomous Mobility Germany GmbH, 85057 Ingolstadt (DE)
(72) Erfinder: FATTAL, Ann-Katrin, 60489 Frankfurt (DE); KARG, Michelle, 90411 Nürnberg (DE); SCHARFENBERGER, Christian, 90411 Nürnberg (DE)
(74) Vertreter: Continental Corporation
(86) Internationale Anmeldenummer: PCT/DE2018/200049
(87) Internationale Veröffentlichungsnummer: WO 2018/215031

(56) Entgegenhaltungen:
- TAEWAN KIM ET AL: "Robust detection of non-motorized road users using deep learning on optical and LIDAR data", 2016 IEEE 19TH INTERNATIONAL CONFERENCE ON INTELLIGENT TRANSPORTATION SYSTEMS (ITSC), IEEE, 1 November 2016 (2016-11-01), pages 271 - 276, XP033028358, DOI: 10.1109/ITSC.2016.7795566
- CLEMENS-ALEXANDER BRUST ET AL: "Convolutional Patch Networks with Spatial Prior for Road Detection and Urban Scene Understanding", ARXIV.ORG, CORNELL UNIVERSITY LIBRARY, 201 OLIN LIBRARY CORNELL UNIVERSITY ITHACA, NY 14853, 23 February 2015 (2015-02-23), XP080787653

## Beschreibung

Die Erfindung betrifft ein Verfahren zur Convolutional Neural Network-basierten Erkennung von Objekten in einem Bild einer Kamera.

Es ist bekannt, Objekte wie beispielsweise Fahrzeuge im Straßenverkehr in einem Bild oder in einer Bildfolge einer Frontkamera, welche hinter einer Windschutzscheibe eines Fahrzeugs montiert ist, zu detektieren. Die Detektion von Objekten in Bilddaten gliedert sich dabei typischerweise in zwei Schritte: Zunächst erfolgt ein Lokalisieren möglicher Objektregionen, und daran schließt sich eine Klassifikation an, in welcher eine Gruppenzugehörigkeit von Objekten innerhalb der Objektregionen bestimmt wird.

Zum Lokalisieren der Objektregionen bedienen sich bekannte Detektionsalgorithmen sogenannter "Region-Proposal"-Methoden wie beispielsweise "Selective Search". Das Lokalisieren potentieller Objektregionen dient der Erhöhung der Effizienz bzw. der Performance von nachgelagerten Detektions- und Klassifikationsstufen. Eine entsprechende Methode wird beispielsweise in dem wissenschaftlichen Artikel "Selective Search for Object Recognition" von J.R. Uijlings et al aus dem Jahr 2013 beschrieben (veröffentlicht in "International Journal of Computer Vision", vol. 104, n. 2, S. 154 bis 171).

Neueste Detektionsalgorithmen arbeiten mit neuronalen Netzwerken, in denen neben der Klassifikation auch die Region-Proposal-Methode integriert ist und ein gemeinsames Lernverfahren für die Gewichte angewandt wird. Entsprechende Verfahren sind beispielsweise in den folgenden wissenschaftlichen Artikeln beschrieben: S. Ren et al. (2015): "Faster r-cnn: Towards real-time object detection with region proposal networks", 29th Annual Conference on Neural Information Processing Systems 2015, S. 91-99; ISBN: 78-1-5108-2502-4; J. Redmon et al. (2016): "You only look once: Unified, real-time object detection", Proceedings of the IEEE Conference on Computer Vision and Pattern Recognition, S. 779-788; W. Liu et al. (2016): "Ssd: Single shot multibox detector", European Conference on Computer Vision, S. 21-37, Springer-Verlag; P. Sermanet et al. (2013) :"Overfeat: Integrated recognition, localization and detection using convolutional networks", arXiv preprint arXiv:1312.6229.

Dabei werden eine Lokalisierungs-Stufe und eine Klassifikations-Stufe einer Objektdetektionskette in einem gemeinsamen System abgebildet. Insbesondere können beide Stufen auf einem gemeinsamen Feature-Set basieren und zusätzlich weitere Verarbeitungsschritte spezialisiert für die Objektdetektion oder Klassifikation enthalten. In diesen Ansätzen wird die Lokalisierung der Objektregionen innerhalb eines Bilds durch einen sogenannten "sliding Window"-Ansatz mit Objekt-Scores pro sliding Window realisiert (ein "Window" bedeutet in diesem Fall einen Ausschnitt aus der Sensor-Information, z.B. Bildausschnitt).

Die Windows mit den höchsten Scores werden an die Klassifikationsstufe des Netzes weitergeleitet. Der Score setzt sich dabei aus Merkmalen wie Kanten oder Ecken zusammen und berücksichtigt nicht die Position des Windows im Bild. Dies kann anschaulich anhand des folgenden Beispiels erläutert werden: Ein Auto im Himmel wird als genauso wahrscheinlich angenommen, wie ein Auto auf einem befahrbaren Bereich, da das Netzwerk lediglich Signale pro sliding Window betrachtet und keine globale Information wie die Position berücksichtigt. Dies ist einer der größten Nachteile existierender Methoden, und kann zu einer falschen Detektion führen, die in einer kritischen Anwendung wie Emergency Break Assist eine falsche Bremsung auslösen kann.

In dem Artikel "Contextual priming and feedback for faster r-cnn" von Gupta et al. aus dem Jahr 2016 (European Conference on Computer Vision, S. 330 bis 348) wird ein Ansatz vorgestellt, welcher mittels eines integrierten Segmentierungsansatzes dem Region-Proposal-Network (alias Region-Proposal-Stufe) sowie der Klassifikations-Stufe die Lokalität des zu untersuchenden Ausschnitts im Bild vermittelt. Das System wird hierbei End-to-End trainiert, da sowohl die Segmentierung als auch die Lokalisierung und Klassifikation über neuronale Netzwerke ermittelt werden. Dabei zeigen sich Verbesserungen in der Detektionsrate des gesamten Systems. Ein Nachteil dieses Systems liegt jedoch darin, dass für das Training Labels für die Segmentierung als auch für die Objekte vorliegen müssen, und dass ausschließlich auf Bildmaterial (2D-Signalen) gearbeitet werden kann.

T. Kim et al. zeigen in "Robust Detection of Non-motorized Road Users using Deep Learning on Optical and LIDAR Data", 2016 IEEE 19th International Conference on Intelligent Transportation Systems (ITSC), Seiten 271-276, XP033028358, DOI: 10.119/ITSC.2016.7759566 eine Detektion nichtmotorisierter Verkehrsteilnehmer, bei der Daten eines Lidarsensors mit Deep Learning-basierten Computer-Vision-Ergebnissen fusioniert werden. Anhand der Lidardaten werden Objektregionen gefunden und zusammen mit aus Kamerabildern ermittelten Objektregionen einen CNN zugeführt.

C. A. Brust et al. zeigen in "Convolutional Patch Networks with Spatial Prior for Road Detection and Urban Scene Understanding", arXiv: 1502.06344v1 [cs.CV1], 23. Februar 2015, dass eine räumliche Prior-Information über die Lage eines Bildausschnitts innerhalb eines Bildes als Zusatzinformation an ein CNN übergeben werden kann zur verbesserten Straßenerkennung und zum besseren urbanem Szenenverständnis.

Es ist eine Aufgabe der vorliegenden Erfindung, ein effizientes Verfahren zur Erkennung von Objekten in einem Bild einer Kamera bereitzustellen, welches insbesondere eine verbesserte Lokalisierung von Objektregionen ermöglicht.

Die Aufgabe wird gelöst durch die Gegenstände der unabhängigen Patentansprüche. Vorteilhafte Ausführungsformen sind Gegenstand der abhängigen Ansprüche, der folgenden Beschreibung sowie der Figuren.

Die vorliegende Erfindung schlägt einen generischen Ansatz vor, wonach externe Informationen jeglicher Art, die im Folgenden "Prior-Informationen" genannt werden, in einen CNN-basierten Objektdetektionsansatz integriert werden, mit dem Ziel, dass nur ein minimales Nachtrainieren von oberen Netzwerkschichten notwendig ist, und die Rechenzeit des Gesamtsystems minimal beeinflusst wird. CNN steht dabei für Convolutional Neural Network. Bei den Prior-Informationen kann es sich insbesondere um globale Informationen handeln, z.B. um temporäre Informationen und/oder um Ortsinformationen. Unter dem Merkmal "externe Prior-Informationen" kann verstanden werden, dass die Prior-Informationen nicht nur durch eine Auswertung eines aufgenommenen Bilds selbst oder durch das CNN generiert werden, sondern auch von einer externen Quelle bereitgestellt werden, z.B. von einem weiteren Sensor des Fahrzeugs, z.B. einem Radar-, einem Lidar- oder einem Ultraschall-Sensor, einer Infrarot-Kamera oder einem Laserscanner.

Im Unterschied zu dem vorstehend beschriebenen Verfahren nach Gupta aus dem Jahr 2016, wonach Ortsinformationen durch das CNN selbst generiert werden ("interne" Informationen), kann mittels der externen Prior-Informationen gemäß der vorliegenden Erfindung ein Trainieren einer Funktion zur Berechnung der Prior-Information von einem Trainieren des Netzwerkes separiert werden. Dadurch kann ein breiteres Spektrum an Prior-Informationen umfasst bzw. in die Region-Proposal-Methode zum Lokalisieren von Objektregionen integriert werden. Z.B. sind eine Erweiterung auf zeitliche Informationen oder das Anwenden von Attention Modeling möglich. Weiterhin wird eine Verallgemeinerung zu jeglicher Form der Prior-Informationen ermöglicht, wobei gleichzeitig ein minimalistischer Ansatz hinsichtlich Trainingsaufwand und Rechenzeit zur Laufzeit bereitgestellt wird.

Gemäß einem ersten Aspekt der Erfindung wird ein Verfahren zur Erkennung von Objekten in einem Bild einer Aufnahmeeinheit, beispielsweise einer Kamera, einer Radareinheit oder einem Ultraschallgerät, bereitgestellt. Im Folgenden wird die Erfindung oftmals - ohne darauf beschränkt zu sein - anhand einer Kamera als Aufnahmeeinheit beschrieben. Die folgenden Erläuterungen im Zusammenhang mit einer Kamera gelten sinngemäß auch für andere Aufnahmeeinheiten.

Gemäß dem erfindungsgemäßen Verfahren wird ein Bild aufgenommen. Insbesondere wird ein Bild einer äußeren Umgebung eines Fahrzeugs mit einer an dem Fahrzeug angeordneten Kamera, einer Radareinheit oder einem Ultraschallgerät aufgenommen. Die Blickrichtung insbesondere der Fahrzeugkamera kann dabei beliebig gewählt werden. So kann die Fahrzeugkamera beispielsweise im Bereich hinter einer Windschutzscheibe des Fahrzeugs angeordnet sein und durch diese in Fahrtrichtung nach vorn hindurchblicken. Dies ist jedoch rein beispielhaft. Ebenso kann die Fahrzeugkamera beispielsweise im Bereich hinter einer Heckscheibe des Fahrzeugs angeordnet sein und durch diese in Rückwärtsrichtung hindurchblicken. Bei dem Fahrzeug handelt es sich beispielsweise um ein Kraftfahrzeug, wie Auto, Bus oder Lastkraftwagen, um ein Schienenfahrzeug, ein Luftfahrzeug oder ein Wasserfahrzeug.

Weiterhin wird eine Objektregion innerhalb des Bilds mittels einer Region-Proposal-Methode lokalisiert ("Region-Proposal-Stufe"), und ein Objekt wird innerhalb der Objektregion klassifiziert ("Klassifikations-Stufe"). Dabei ist die Region-Proposal-Methode und das Klassifizieren in ein Convolutional Neural Network (CNN) integriert. Insbesondere können die Region-Proposal-Methode und das Klassifizieren in ein gemeinsames Convolutional Neural Network integriert sein. Dabei kann insbesondere ein gemeinsames Lernverfahren für die Gewichte angewandt werden. Somit können insbesondere die Region-Proposal-Stufe und die Klassifikations-Stufe einer Objektdetektionskette (= Lokalisieren + Klassifizieren) in einem gemeinsamen System abgebildet werden. Dabei können beide Stufen auf einem gemeinsamen Feature-Set basieren und zusätzlich weitere Verarbeitungsschritte spezialisiert für die Objektdetektion oder Klassifikation enthalten.

Wie eine entsprechende Integration, Architektur bzw. Methode ausgestaltet sein kann, ist beispielsweise in den folgenden wissenschaftlichen Artikeln beschrieben: S. Ren, K.H. (2015): S. Ren et al. (2015): "Faster r-cnn: Towards real-time object detection with region proposal networks", 29th Annual Conference on Neural Information Processing Systems 2015, S. 91-99; ISBN: 78-1-5108-2502-4; J. Redmon et al. (2016): "You only look once: Unified, real-time object detection", Proceedings of the IEEE Conference on Computer Vision and Pattern Recognition, S. 779-788; W. Liu et al. (2016): "Ssd: Single shot multibox detector", European Conference on Computer Vision, S. 21-37, Springer-Verlag; P. Sermanet et al. (2013):"Overfeat: Integrated recognition, localization and detection using convolutional networks", arXiv preprint arXiv:1312.6229.

Insbesondere kann gemäß der vorliegenden Erfindung vorgesehen sein, externe Prior-Informationen, welche eine mögliche Objektregion hervorheben oder vorschlagen, insbesondere globale Prior-Informationen, dem Convolutional Neural Network (CNN) zuzuführen. Insbesondere können innerhalb des von der Kamera aufgenommenen Bilds durch die Prior-Informationen Objekte bzw. deren Eigenschaften hervorgehoben werden, sodass ein die genannten Objekte enthaltener Bildbereich für die Regional-Proposal-Methode ebenfalls hervorgehoben und dadurch mit erhöhter Wahrscheinlichkeit durch die Regional-Proposal-Methode als Objektregion lokalisiert wird, innerhalb welcher anschließend die Klassifikation durchgeführt wird.

Die Prior-Informationen stellen insbesondere zusätzliche Informationen dar, welche Eigenschaften von Objekten und/oder Eigenschaften der den Objekten zugehörigen Umgebungen innerhalb des von der Kamera aufgenommenen Bilds hervorheben. Neben dem Hervorheben eines Objekts, hilft es auch, die Umgebung des Objekts zu kennen. Als Beispiel sei die Straße genannt, auf der sich im Gegensatz zum Himmel ein Auto befinden kann. Dadurch wird die Regional-Proposal-Methode dabei unterstützt, in dem von der Kamera aufgenommenen Bild eine Objektregion zu identifizieren, in welcher sich potentiell ein zu klassifizierendes oder ein klassifizierbares Objekt befindet. Somit können die Effektivität der Regional-Proposal-Methode und die Effizienz der Klassifikation gesteigert werden.

Es handelt sich bei den Prior-Informationen um Informationen zu Eigenschaften von Objekten und/oder Eigenschaften von den Objekten zugehörigen Umgebungen innerhalb des Bildes, welche mittels eines externen Sensors generiert werden oder fest vorgegeben sind.

Die Prior-Informationen werden außerhalb des Convolutional Neural Networks generiert. Das Generieren kann beispielsweise mittels eines externen Sensors erfolgen, z.B. durch einen Radar-, einen Lidar- oder einen Ultraschall-Sensor, durch eine Infrarot-Kamera oder durch einen Laserscanner. Alternativ kann auch beispielsweise das von der Aufnahmeeinheit, z.B. von der Kamera aufgenommene Bild mittels einer Einheit verarbeitet werden, welche außerhalb der Netzwerkarchitektur (dem Convolutional Neural Network) liegt, und das Ergebnis der Verarbeitung (die Prior-Informationen) kann dem Convolutional Neural Network zugeführt werden.

Dadurch können die zusätzlichen Prior-Informationen sowohl der Region-Proposal-Stufe als auch der Klassifikations-Stufe zur Verfügung gestellt werden. Dabei kann die Prior-Information allen oder nur ausgewählten Layern innerhalb des Convolutional Neural Network Networks als zusätzliche Information zur Verfügung gestellt werden.

Die objektspezifischen Informationen der Prior-Information, z.B. Lokalität, zeitliche Veränderung/Abhängigkeit und/oder weitere Informationen von Sensoren in Form eines Priors (Vektor, Matrix oder ähnliche Darstellungsform) leisten einen Beitrag, die Detektionsrate zu verbessern und Rechenzeit zu sparen.

Dabei kann insbesondere ein Scoring Algorithmus der Region-Proposal-Methode verbessert werden, indem die Scores nicht nur auf den extrahierten Bildmerkmalen basieren, sondern auch auf den externen Prior-Informationen, welche beispielsweise die Lage des Objektes im Bild und/oder zeitliche Informationen beinhalten. Weiterhin wird ermöglicht, dass fälschlich von der Region-Proposal-Stufe unterdrückte Objekte durch die Prior-Information verstärkt werden, und dadurch die sogenannte "false-negative"-Rate verringert wird. Im Rahmen der Klassifizierung können aufgrund der zusätzlichen Informationen Objektklassen besser zugeordnet werden, wodurch sich beispielsweise die Anzahl der falsch detektierten Objekte reduzieren lässt.

Die Prior-Informationen können in dem Convolutional Neural Network an verschiedenen Stellen eingesetzt werden. So ist es möglich, die Prior-Informationen direkt in das Netzwerk als ein oder mehrere zusätzliche Layer einzusetzen. Weiterhin ist ein Einsatz in wenigstens einer zusätzlichen Feature-Map möglich, die sowohl beim Training als auch beim Testing genutzt werden kann, z.B. als zusätzliche Feature-Map in einem Layer oder in mehreren Layern des Netzwerks. Insbesondere können die Prior-Informationen in einen letzten gemeinsamen Layer des Convolutional Neural Networks integriert werden. Dies ermöglicht, dass eine Anzahl von durch die Klassifikationsstufe auszuwertenden Regionen reduziert werden kann.

Ferner können die Prior-Informationen an jeder beliebigen Stelle im Convolutional Neural Network mit einem grafischen Modell kombiniert werden. Dabei verändern die Prior-Informationen gelernte Gewichte des Convolutional Neural Networks nicht. Beispielsweise können die Prior-Informationen direkt hinter der Region-Proposal-Stufe integriert/eingefügt werden, um den Score der Windows zu verändern.

Gemäß einer ersten erfindungsgemäßen Alternative werden die Prior-Informationen in wenigstens einen Layer des Convolutional Neural Networks eingefügt, und der wenigstens eine Layer mit den Prior-Informationen wird der Region-Proposal-Methode zur Lokalisierung der Objektregion zugeführt. Beispielsweise können die Prior-Informationen in einen fünften Convolutional-Layer eines ZF-Netzwerkes eingefügt werden, wobei der fünfte Convolutional-Layer mit den Prior-Informationen anschließend der Region-Proposal-Stufe zur Lokalisierung der Objektregion zugeführt wird.

Gemäß einer zweiten erfindungsgemäßen Alternative werden die Prior-Informationen unmittelbar der Region-Proposal-Methode zur Lokalisierung der Objektregion zugeführt.

Gemäß der ersten und der zweiten Alternative kann weiterhin vorgesehen sein, dass die Prior-Informationen zusätzlich an einen Klassifikator zum Klassifizieren weitergegeben werden (wodurch die Erkennungsgenauigkeit weiter gesteigert werden kann) - oder auch nicht (wodurch Rechenaufwand gesenkt werden kann).

Die Prior-Informationen sollen in einem ersten Schritt die in das Convolutional Neural Network eingebettete Region-Proposal-Methode zu den richtigen Objekten führen. Dazu werden Objektregionen bestimmt, die zu einem Objekt gehören können. Für diese Objektregionen-Vorschläge gibt es eine Lage im Bild, aber die Prior-Informationen wissen nicht bzw. enthalten keine Informationen darüber, ob es sich bei einer vorgeschlagenen Objektregion um ein Objekt oder etwas anderes handelt.

Gemäß einer weiteren Ausführungsform können die Prior-Informationen in diesem Sinne wenigstens eine der folgenden Informationen enthalten: eine Ortsinformation bezüglich einer möglichen Objektregion, insbesondere eine globale Lage der möglichen Objektregion im Bild (wobei die Prior-Informationen in einer globalen Weise berechnet werden können, indem das gesamte von der Kamera aufgenommene Bild betrachtet wird), eine Umgebungsinformation der möglichen Objektregion, eine zeitliche Veränderung der möglichen Objektregion in einer von der Kamera aufgenommen Bildsequenz (beispielsweise können die Prior-Informationen enthalten, dass sich eine Objektregion in einer bestimmten Richtung von Bild zu Bild bewegt, z.B. von links nach rechts oder von oben nach unten, oder dass eine Objektregion von Bild zu Bild ihre Farbe ändert), eine zeitliche Abhängigkeit der möglichen Objektregion in einer von der Kamera aufgenommen Bildsequenz (z.B. ein Verhalten der Objektregion im Verlauf der Bildsequenz, insbesondere wie die Objektregion mit ihrer Umgebung reagiert; beispielsweise kann sich die Darstellung eines Fahrzeugs verkleinern, welches sich von Bild zu Bild von der Kamera wegbewegt) und eine Informationen eines anderen Sensors als die Kamera.

Durch die Prior-Informationen wird der Region-Proposal-Methode, welche in das Convolutional Neural Network eingebettet ist, mitgeteilt, dass sich eine mögliche Objektregion von anderen Objektregionen unterscheidet, und dass es sich lohnt, eine Klassifizierung in der möglichen Objektregion durchzuführen. Was für ein Objekt in der möglichen Objektregion klassifiziert werden könnte, ist zunächst nicht bekannt und auch nicht relevant. Die Prior-Informationen liefern jedoch dem Convolutional Neural Network die Information, dass sich innerhalb der möglichen Objektregion etwas Interessantes befindet, sodass die mögliche Objektregion anschließend durch die Region-Proposal-Methode als Objektregion lokalisiert wird, und anschließend in der lokalisierten Objektregion die Klassifikation durchgeführt wird.

Dabei können die Prior-Informationen, insbesondere Ortsinformationen ("Location Prior"-Informationen), eine oder mehrere der folgend genannten Formen annehmen: Die Prior-Informationen können pro Bild angegeben oder berechnet werden. Weiterhin können die Prior-Informationen pro Umgebung, in welcher der Klassifikator arbeitet, festgelegt werden. Ferner können die Prior-Informationen fest vorgegeben werden (feste "Region of Interest") oder für jede Objektklasse spezifisch sein. Möglich sind auch generische Prior-Informationen (wie beispielsweise Aufmerksamkeit-Maps). Außerdem können die Prior-Informationen aus anderen Sensoren wie beispielsweise Radar, high Flash LIDAR, Infrarot Kamera oder Ultraschall berechnet werden. Auch können die Prior-Informationen aus zeitlichen Informationen wie beispielsweise einer Veränderung oder einer Abhängigkeit bestehen. Weiterhin können Prior Informationen aus einer Kombination aller oder einzelner genannter Informationen berechnet werden.

Eine Wahrscheinlichkeit, dass sich ein Objekt an einer bestimmten Stelle innerhalb des Bilds befindet, kann beispielsweise basierend auf folgenden Informationen berechnet werden: Sensoren, Attention-Modell oder Bildmerkmalen.

Gemäß einem zweiten Aspekt der Erfindung wird eine Vorrichtung bereitgestellt, welche eine Aufnahmeeinheit, z.B. eine Kamera und eine Prozessoreinheit, welche dazu eingerichtet sind, die Schritte des Verfahrens gemäß dem ersten Aspekt der Erfindung auszuführen, umfasst.

Gemäß einem dritten Aspekt der Erfindung wird ein Fahrzeug bereitgestellt, welches eine Vorrichtung gemäß dem zweiten Aspekt der Erfindung umfasst. Bei dem Fahrzeug handelt es sich beispielsweise um ein Kraftfahrzeug, wie Auto, Bus oder Lastkraftwagen, aber auch beispielsweise um ein Luftfahrzeug, z.B. ein Flugzeug, oder um ein Schienenfahrzeug, z.B. einen Zug oder eine Straßenbahn, oder um ein Wasserfahrzeug, z.B. ein Schiff oder Boot.

Gemäß einem vierten Aspekt der Erfindung wird ein Computerprogramm bereitgestellt, welches Befehle umfasst, die bei der Ausführung des Computerprogramms durch die Vorrichtung diese veranlassen, die Schritte eines Verfahrens gemäß dem ersten Aspekt der Erfindung auszuführen.

Gemäß einem fünften Aspekt der Erfindung wird ein computerlesbares Medium, z.B. ein computerlesbarer Datenträger, bereitgestellt, auf dem das Computerprogramm gemäß dem vierten Aspekt der Erfindung gespeichert ist.

Die Erfindung gemäß der vorliegenden Anmeldung ermöglicht, dass die sogenannte "false-positive"-Rate verbessert werden kann. Weiterhin wird eine Verringerung von Rechenzeit ermöglicht, da der Klassifikator nur in Regionen, in denen mit hoher Wahrscheinlichkeit ein Objekt einer gewünschten Klasse zu finden ist, seine Merkmalsextraktion ausführt.

Insbesondere profitieren kamerabasierte Fahrerassistenzsysteme von der vorliegenden Erfindung, da die Detektion von Objekten in schwierigen Szenen verbessert werden kann. Z.B. kann eine Detektion von weit entfernten Fahrzeugen wesentlich durch die Prior-Informationen, welche insbesondere Umgebungs-, Lokalisations- und Zeit-Informationen beinhalten können, verbessert werden. Mithilfe der Prior-Informationen können, insbesondere dort, wo sich ein befahrbarer Bereich im Bild befindet, Fehldetektion von Autos im Himmel oder in Baumbereichen vermindert bzw. ausgeschlossen werden. Außerdem kann der Detektionsbereich auf weitere Distanzen erweitert werden.

Die vorliegende Erfindung kann auch in anderen Architekturen von neuronalen Netzwerken verwendet werden bzw. in einer Sequenzierung. Die erfindungsgemäße Lehre kann für die Darstellung/Anzeige von potentiellen Objekten genutzt werden. Insbesondere kann die Erfindung im Bereich der Robotik für maschinelles Sehen und im speziellen für ADAS verwendet werden.

Gleiches gilt für die Signalverarbeitung aus der Medizintechnik. Ferner kann die Erfindung direkt in Verbindung mit Wärmebildern, Ultraschallbildern, Radarbildern Magnetresonanzsignalen, einer Nah-Infrarotspektroskopie oder einer Computertomografie genutzt werden. Die Erfindung kann auch bei Überwachungsanlagen sowie Radarantennen, Synthetic Aperture Radar und Laser-Scannern verwendet werden. Zudem kann die Erfindung in der industriellen Analyse und Inspektion verwendet werden. Außerdem kann die Erfindung in einer beliebigen Kombination von oben genannten Techniken verwendet werden.

Im Folgenden werden Ausführungsbeispiele der Erfindung anhand der schematischen Zeichnung näher erläutert. Hierbei zeigt
- Fig. 1: eine Seitenansicht eines Fahrzeugs mit einem Ausführungsbeispiel einer erfindungsgemäßen Vorrichtung,
- Fig. 2: eine erste mögliche Einfüge-Position von Prior-Informationen in einer Tool-Chain zur Erkennung von Objekten in einem Bild einer Kamera,
- Fig. 3: eine zweite mögliche Einfüge-Position von Prior-Informationen in einer Tool-Chain zur Erkennung von Objekten in einem Bild einer Kamera,
- Fig. 4: eine dritte mögliche Einfüge-Position von Prior-Informationen in einer Tool-Chain zur Erkennung von Objekten in einem Bild einer Kamera,
- Fig. 5: eine vierte mögliche Einfüge-Position von Prior-Informationen in einer Tool-Chain zur Erkennung von Objekten in einem Bild einer Kamera und
- Fig. 6: eine fünfte mögliche Position Einfüge-Position von Prior-Informationen in einer Tool-Chain zur Erkennung von Objekten in einem Bild einer Kamera.

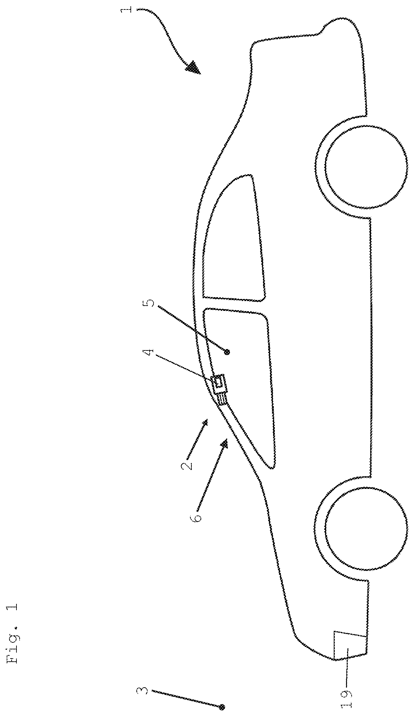

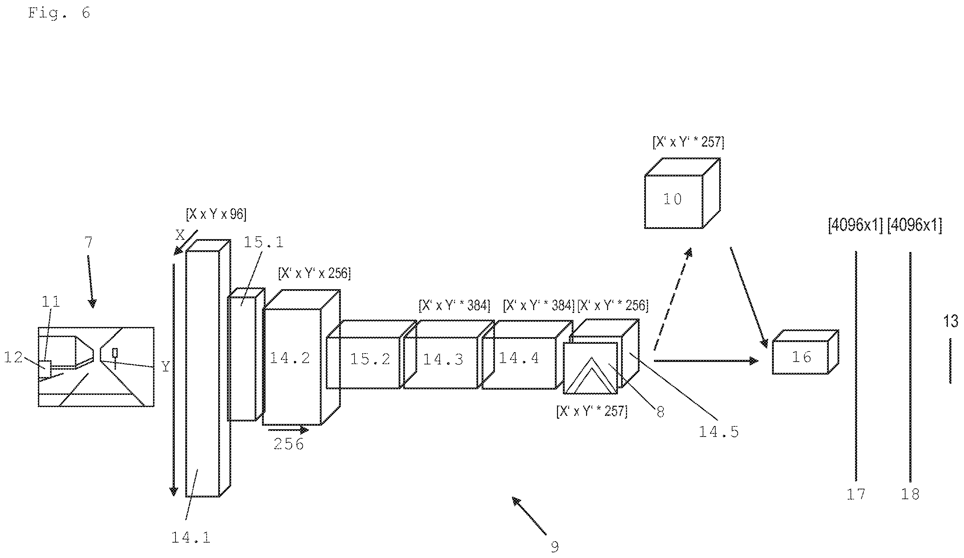

Fig.1 zeigt ein Fahrzeug 1 in Form eines Automobils. Das Fahrzeug 1 umfasst eine Aufnahmeeinheit in der Form einer Kamera 2 zur Erfassung einer äußeren Umgebung 3 des Fahrzeugs. Die Kamera 2 umfasst ferner eine Prozessoreinheit 4 und ist in einem Innenraum 5 des Fahrzeugs 1 angeordnet, und zwar insbesondere in einem Bereich hinter einer Windschutzscheibe 6 des Fahrzeugs **1.** Dies ist jedoch rein beispielhaft. Ebenfalls kann beispielsweise auch eine Montage an einer Heckscheibe des Fahrzeugs 1 mit Blickrichtung nach hinten vorgesehen sein. Mittels der Kamera 2 können durch die Windschutzscheibe 6 mehrere einzelne Außenaufnahmen bzw. Bilder 7 (vgl. Fig. 6) von der äußeren Umgebung 3 des Fahrzeugs 1 aufgenommen werden, wobei die mehreren Bilder zeitlich aufeinanderfolgend gemacht werden und eine Bildfolge der äußeren Umgebung 3 des Fahrzeugs 1 bilden.

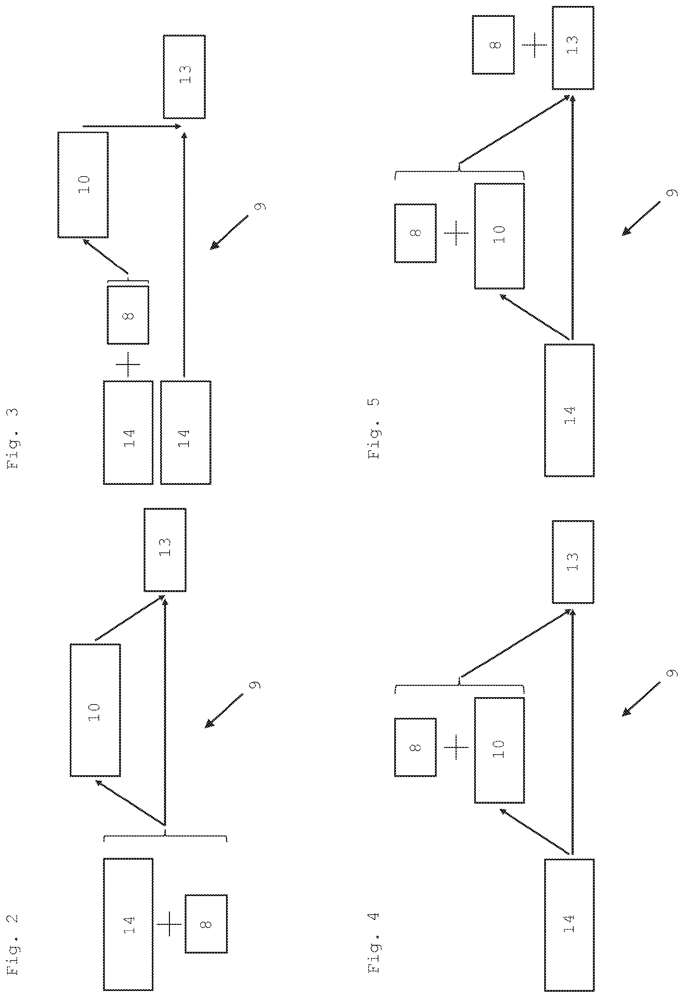

Fig. 2 bis 6 zeigen mögliche Positionen zum Einfügen wenigstens einer externen Prior-Information 8 in einer Tool-Chain 9 bzw. innerhalb eines Verfahrens zur Erkennung von Objekten in einem Bild der Kamera 2. Bei den Prior-Informationen kann es sich beispielsweise um globale Orts-Informationen eines zu detektierenden Objekts handeln, wobei die Orts-Information beispielsweise von einem Radar-Sensor 19 des Fahrzeugs 1 stammen können. Die Tool-Chain 9 umfasst ein Region-Proposal-Netzwerk 10 bzw. eine Region-Proposal-Stufe zum Lokalisieren von Objektregionen innerhalb des Bilds mittels einer Region-Proposal-Methode. Fig. 6 zeigt beispielhaft eine Objektregion 11 innerhalb des Bilds 7. Innerhalb der Bildregion 11 kann ein zu detektierendes Objekt 12 (nicht näher dargestellt), z.B. ein Fahrzeug, abgebildet sein.

Weiterhin umfasst die Tool-Chain 9 eine Klassifikations-Stufe 13 zum Klassifizieren des Objekts 12 innerhalb der Objektregion 11. Das Region-Proposal-Netzwerk 10 und die Klassifikations-Stufe 13 sind in den gezeigten Ausführungsbeispielen in ein Convolutional Neural Network (CNN) integriert, welches insbesondere mehrere Convolutional Layers 14 umfasst.

Gemäß Fig. 2 werden Prior-Informationen 8, welche die Objektregion 11 hervorheben, innerhalb welcher sich das Objekt 12 befindet, in einen Convolutional Layer 14 des Convolutional Neural Networks eingefügt. Der Convolutional Layer 14 mit den Prior-Informationen 8 wird dem Region-Proposal-Netzwerk 10 zur Lokalisierung der Objektregion 11 zugeführt. Der Klassifikations-Stufe 13 wird die erkannte Objektregion 11 zugeführt. Zum Klassifizieren des Objekts 12 innerhalb der Objektregion 11 wird weiterhin der Convolutional Layer 14 mit den Prior-Informationen 8 an die Klassifikations-Stufe 13 weitergegeben.

Gemäß Fig. 3 werden Prior-Informationen 8, welche die Objektregion 11 hervorheben, innerhalb welcher sich das Objekt 12 befindet, in einen Convolutional Layer 14 des Convolutional Neural Networks eingefügt. Der Convolutional Layer 14 mit den Prior-Informationen 8 wird dem Region-Proposal-Netzwerk 10 zur Lokalisierung der Objektregion zugeführt, jedoch - abweichend von dem Beispiel nach Fig. 2 - nicht an die Klassifikationsstufe 13 weitergegeben. Der Klassifikations-Stufe 13 wird die erkannte Objektregion 11 und - zum Klassifizieren des Objekts 12 innerhalb der Objektregion 11 - ein Convolutional Layer 14 ohne die Prior-Information 8 zugeführt.

Gemäß Fig. 4 werden Prior-Informationen 8, welche die Objektregion 11 hervorheben, innerhalb welcher sich das Objekt 12 befindet, an einer beliebigen Stelle in das Region-Proposal-Netzwerk 10 zur Lokalisierung der Objektregion 11 zugeführt eingefügt. Der Klassifikations-Stufe 13 wird die erkannte Objektregion 11 und - zum Klassifizieren des Objekts 12 innerhalb der Objektregion 11 - ein Convolutional Layer 14 ohne die Prior-Information 8 zugeführt.

Gemäß Fig. 5 werden Prior-Informationen 8 welche die Objektregion 11 hervorheben, innerhalb welcher sich das Objekt 12 befindet, an einer beliebigen Stelle in das Region-Proposal-Netzwerk 10 zur Lokalisierung der Objektregion 11 zugeführt eingefügt. Der Klassifikations-Stufe 13 werden die erkannte Objektregion 11 und - zum Klassifizieren des Objekts 12 innerhalb der Objektregion 11 - ein Convolutional Layer 14 sowie die Prior-Information 8 zugeführt.

Fig. 6 zeigt ein ZF-Netzwerk mit fünf Convolutional-Layers 14.1 bis 14.5, mit einem ersten Pooling-Layer 15.1 zwischen einem ersten Convolutional-Layer 14.1 und einem zweiten Convolutional-Layer 14.2, mit einem zweiten Pooling-Layer 15.2 zwischen dem zweiten Convolutional-Layer 14.2 und einem dritten Convolutional-Layer 14.3, mit einem Normalisieruns-Layer 16 sowie mit zwei fully-connected-Layers 17 und 18 vor der Klassifikationsstufe 13.

Die Prior-Informationen 8 welche die Objektregion 11 hervorheben, innerhalb welcher sich das Objekt 12 befindet, werden gemäß dem Ausführungsbeispiel nach Fig. 6 in den fünften Convolutional-Layer 14.5 des ZF-Netzwerkes eingefügt, wobei der fünfte Convolutional-Layer 14.5 mit den Prior-Informationen 8 anschließend der Region-Proposal-Stufe 10 zur Lokalisierung der Objektregion 11 zugeführt wird. An die Klassifikations-Stufe 13 wird die Prior-Information 8 nicht weitergeleitet.

## Patentansprüche

1. Verfahren zur Convolutional Neural Network-basierten Erkennung von Objekten (12) in einem Bild (7) einer Aufnahmeeinheit (2), das Verfahren umfassend die Schritte:
- Aufnehmen eines Bilds (7), insbesondere eines Bilds (7) einer äußeren Umgebung (3) eines Fahrzeugs (1) mit einer an dem Fahrzeug (1) angeordneten Aufnahmeeinheit (2),
- Lokalisieren einer Objektregion (11) innerhalb des Bilds (7) mittels einer Region-Proposal-Methode (10),
- Klassifizieren (13) eines Objekts (12) innerhalb der Objektregion (11),
wobei
- die Region-Proposal-Methode (10) und das Klassifizieren (13) in das Convolutional Neural Network integriert sind, und
- externe Prior-Informationen (8), welche eine mögliche Objektregion (11) hervorheben und die mögliche Objektregion (11) dadurch mit erhöhter Wahrscheinlichkeit durch die Region-Proposal-Methode als Objektregion lokalisiert wird, dem Convolutional Neural Network zugeführt werden,
wobei es sich bei den Prior-Informationen (8) um Informationen zu Eigenschaften von Objekten und/oder Eigenschaften von den Objekten zugehörigen Umgebungen innerhalb des Bildes (7) handelt, welche mittels eines externen Sensors generiert werden oder fest vorgegeben sind, wobei mindestens eine der Prior-Informationen (8) eine Ortsinformation eines zu detektierenden Objekts ist,
das Verfahren **dadurch gekennzeichnet, dass**
- die Prior-Informationen (8) in wenigstens einen Layer (14) des Convolutional Neural Networks eingefügt werden, und der wenigstens eine Layer (14) mit den Prior-Informationen (8) der Region-Proposal-Methode (10) zur Lokalisierung der Objektregion (11) zugeführt wird
oder
- die Prior-Informationen (8) unmittelbar der Region-Proposal-Methode (10) zur Lokalisierung der Objektregion (11) zugeführt werden.

2. Verfahren nach Anspruch **1,** wobei die Prior-Informationen dem Convolutional Neural Network die Information liefern, dass sich innerhalb der möglichen Objektregion (11) etwas Interessantes befindet, sodass die mögliche Objektregion (11) anschließend durch die Region-Proposal-Methode (10) als Objektregion lokalisiert wird, und anschließend in der lokalisierten Objektregion die Klassifikation durchgeführt wird.

3. Verfahren nach Anspruch 1 oder 2, wobei die Ortsinformation eine globale Lage einer möglichen Objektregion (11) im Bild (7) ist, wobei die Prior-Informationen in einer globalen Weise berechnet werden, indem das gesamte von der Aufnahmeeinheit (2) aufgenommene Bild (7) betrachtet wird.

4. Verfahren nach einem der vorstehenden Ansprüche, wobei die Prior-Informationen (8) zusätzlich an einen Klassifikator (13) zum Klassifizieren des Objekts (12) weitergegeben werden.

5. Verfahren nach einem der vorstehenden Ansprüche, wobei mithilfe der mindestens einen Prior-Information (8), die eine Ortsinformation ist, nämlich dort, wo sich ein befahrbarer Bereich im Bild (7) befindet, Fehldetektion von Autos im Himmel oder in Baumbereichen vermindert oder ausgeschlossen werden.

6. Vorrichtung umfassend eine Aufnahmeeinheit (2) und eine Prozessoreinheit (4), welche dazu eingerichtet ist, das Verfahren nach einem der vorherigen Ansprüche auszuführen, wobei
die Aufnahmeeinheit dazu eingerichtet ist, ein Bild (7) aufzunehmen, insbesondere ein Bild (7) einer äußeren Umgebung (3) eines Fahrzeugs (1) mit der Aufnahmeeinheit (2), die an dem Fahrzeug (1) angeordnet ist,
die Prozessoreinheit (4) dazu eingerichtet ist,
- externe Prior-Informationen (8) bereitzustellen, welche eine mögliche Objektregion (11) hervorheben und die mögliche Objektregion (11) dadurch mit erhöhter Wahrscheinlichkeit durch die Region-Proposal-Stufe als Objektregion lokalisiert wird, und dem Convolutional Neural Network zuzuführen, wobei mindestens eine der Prior-Informationen (8) eine Ortsinformation Ortsinformation eines zu detektierenden Objekts ist, und
wobei die Region-Proposal-Stufe (10) eingerichtet ist zum Lokalisieren der Objektregion (11) innerhalb des Bilds (7) mittels einer Region-Proposal-Methode (10), und
wobei der Klassifikator eingerichtet ist zum Klassifizieren (13) eines Objekts (12) innerhalb der Objektregion (11),
die Vorrichtung **dadurch gekennzeichnet, dass** die Prozessoreinheit ferner dazu eingerichtet ist, dass
- die Prior-Informationen (8) in wenigstens einen Layer (14) des Convolutional Neural Networks eingefügt werden, und der wenigstens eine Layer (14) mit den Prior-Informationen (8) der Region-Proposal-Stufe (10) zur Lokalisierung der Objektregion (11)zugeführt werden
oder
- Prior-Informationen (8) unmittelbar der Region-Proposal-Stufe (10) zur Lokalisierung der Objektregion (11) zugeführt werden.

7. Fahrzeug (1) umfassend eine Vorrichtung nach Anspruch 6.

8. Computerprogramm, umfassend Befehle, die bei der Ausführung des Computerprogramms durch die Vorrichtung nach Anspruch 8 die Aufnahmeeinheit (2) und die Prozessoreinheit (4) veranlassen, die Schritte des Verfahrens nach einem der Ansprüche 1 bis 6 auszuführen.

9. Computerlesbares Medium, auf dem das Computerprogram nach Anspruch 8 gespeichert ist.

## Claims

1. Method for convolutional neural network-based detection of objects (12) in an image (7) of a recording unit (2), the method comprising the steps:
- recording an image (7), in particular an image (7) of an external environment (3) of a vehicle (1), using a recording unit (2) arranged on the vehicle (1),
- localizing an object region (11) within the image (7) using a region proposal method (10),
- classifying (13) an object (12) within the object region (11),
wherein
- the region proposal method (10) and classification (13) are integrated into the convolutional neural network, and
- external prior information (8), which accentuates a possible object region (11) and thus leads to the possible object region (11) being more likely to be localized as an object region by the region proposal method, is fed to the convolutional neural network,
wherein the prior information (8) is information concerning properties of objects and/or properties of object-associated environments within the image (7), which are generated by means of an external sensor or fixedly predetermined, wherein at least one piece of the prior information (8) is location information for an object to be detected, wherein the method is **characterized in that**
- the prior information (8) is inserted into at least one layer (14) of the convolutional neural network, and
the region proposal method (10) for locating the object region (11) is supplied to the at least one layer (14) containing the prior information (8)
or
- the prior information (8) is directly supplied to the region proposal method (10) for localizing the object region (11).

2. Method according to Claim 1, wherein the prior information provides the convolutional neural network with the information that there is something of interest within the possible object region (11) so that the possible object region (11) is subsequently localized as an object region by the region proposal method (10), and then the classification is carried out in the localized object region.

3. Method according to Claim 1 or 2, wherein the location information is a global position of a possible object region (11) in the image (7), wherein the prior information is calculated in a global manner by virtue of the entire image (7) recorded by the recording unit (2) being considered.

4. Method according to any of the preceding claims, wherein the prior information (8) is additionally transmitted to a classifier (13) for classifying the object (12).

5. Method according to any of the preceding claims, wherein erroneous detections of cars in the sky or in tree areas are reduced or precluded with the aid of the at least one piece of prior information (8), which is a location information, specifically the location of a drivable area in the image (7).

6. Device comprising a recording unit (2) and a processor unit (4) configured to carry out the method according to any of the preceding claims,
wherein
the recording unit is configured to record an image (7), in particular an image (7) of an external environment (3) of a vehicle (1), with the recording unit (2) arranged on the vehicle (1),
the processor unit (4) is configured
- to provide external prior information (8), which accentuates a possible object region (11) and thus leads to the possible object region (11) being more likely to be localized as an object region by the region proposal stage, and to supply said external prior information to the convolutional neural network, wherein at least one piece of the prior information (8) is location information location information of an object to be detected,
and
wherein the region proposal stage (10) is configured to localize the object region (11) within the image (7) using a region proposal method (10), and
wherein the classifier is configured to classify (13) an object (12) within the object region (11),
the device **characterized in that** the processor unit is further configured so that
- the prior information (8) is inserted into at least one layer (14) of the convolutional neural network, and the region proposal stage (10) for locating the object region (11) is supplied to the at least one layer (14) containing the prior information (8)
or
- prior information (8) is directly supplied to the region proposal stage (10) for localizing the object region (11).

7. Vehicle (1) comprising a device according to Claim 6.

8. Computer program comprising commands which, when the computer program is executed by the device according to Claim 8, cause the recording unit (2) and the processor unit (4) to carry out the steps of the method according to any of Claims 1 to 6.

9. Computer-readable medium on which the computer program according to Claim 8 is stored.

## Revendications

1. Procédé de reconnaissance d'objets (12) dans une image (7) d'une unité d'enregistrement (2) basé sur un réseau neuronal convolutif, le procédé comprenant les étapes suivantes :
- capture d'une image (7), notamment d'une image (7) d'un environnement extérieur (3) d'un véhicule (1) à l'aide d'une unité de prise de vue (2) disposée sur le véhicule (1),
- localisation d'une région d'objet (11) à l'intérieur de l'image (7) au moyen d'une méthode de proposition de région (10),
- classification (13) d'un objet (12) à l'intérieur de la région d'objet (11),
- la méthode de proposition de région (10) et la classification (13) étant intégrées dans le réseau neuronal convolutif, et
- des informations préalables (8) externes, lesquelles mettent en évidence une région d'objet (11) possible et la région d'objet (11) possible est ainsi localisée avec une probabilité accrue en tant que région d'objet par la méthode de proposition de région, étant acheminées au réseau neuronal convolutif, les informations préalables (8) étant des informations sur les propriétés d'objets et/ou les propriétés d'environnements associés aux objets à l'intérieur de l'image (7), lesquelles sont générées au moyen d'un capteur externe ou sont prédéfinies de manière fixe, au moins l'une des informations préalables (8) étant une information de lieu d'un objet à détecter, le procédé étant **caractérisé en ce que**
- les informations préalables (8) sont insérées dans au moins une couche (14) du réseau neuronal convolutif, et
l'au moins une couche (14) avec les informations préalables (8) est acheminée à la méthode de proposition de région (10) afin de localiser la région d'objet (11)
ou
- les informations préalables (8) sont directement acheminées à la méthode de proposition de région (10) afin de localiser la région d'objet (11).

2. Procédé selon la revendication 1, les informations préalables fournissant au réseau neuronal convolutif les informations selon lesquelles quelque chose d'intéressant se trouve dans la région d'objet (11) possible, de sorte que la région d'objet (11) possible est ensuite localisée en tant que région d'objet par la méthode de proposition de région (10), et la classification est ensuite effectuée dans la région d'objet localisée.

3. Procédé selon la revendication 1 ou 2, les informations de lieu étant une position globale d'une région d'objet (11) possible dans l'image (7), les informations préalables étant calculées d'une manière globale en considérant l'ensemble de l'image (7) capturée par l'unité d'enregistrement (2).

4. Procédé selon l'une des revendications précédentes, les informations préalables (8) étant en plus transmises à un classificateur (13) en vue de classifier l'objet (12).

5. Procédé selon l'une des revendications précédentes, une détection erronée de voitures dans le ciel ou dans des zones arborées étant réduite ou exclue à l'aide de l'au moins une information préalable (8), qui est une information de lieu, à savoir là où se trouve une zone carrossable dans l'image (7).

6. Dispositif comprenant une unité d'enregistrement (2) et une unité à processeur (4), laquelle est conçue pour mettre en œuvre le procédé selon l'une des revendications précédentes,
l'unité d'enregistrement étant conçue pour capturer une image (7), notamment une image (7) d'un environnement extérieur (3) d'un véhicule (1) avec l'unité d'enregistrement (2) disposée sur le véhicule (1),
l'unité à processeur (4) étant conçue pour
- fournir des informations préalables (8) externes, lesquelles mettent en évidence une région d'objet (11) possible et la région d'objet (11) possible est ainsi localisée avec une probabilité accrue en tant que région d'objet par l'étape de proposition de région, et les acheminer au réseau neuronal convolutif, au moins l'une des informations préalables (8) étant une information de lieu d'un objet à détecter,
et
l'étape de proposition de région (10) étant conçue pour localiser la région d'objet (11) à l'intérieur de l'image (7) au moyen d'une méthode de proposition de région (10), et
le classificateur étant conçu pour classifier (13) un objet (12) à l'intérieur de la région d'objets (11),
le dispositif étant **caractérisé en ce que** l'unité à processeur est en outre conçue pour que
- les informations préalables (8) sont insérées dans au moins une couche (14) du réseau neuronal convolutif, et l'au moins une couche (14) avec les informations préalables (8) est acheminée à l'étape de proposition de région (10) afin de localiser la région d'objet (11)
ou
- les informations préalables (8) sont directement acheminées à l'étape de proposition de région (10) afin de localiser la région d'objet (11).

7. Véhicule (1) comprenant un dispositif selon la revendication 6.

8. Programme informatique, comprenant des instructions qui, lors de l'exécution du programme informatique par le dispositif selon la revendication 8, amènent l'unité d'enregistrement (2) et l'unité à processeur (4) à exécuter les étapes du procédé selon l'une des revendications 1 à 6.

9. Support lisible par ordinateur sur lequel est enregistré le programme informatique selon la revendication 8.
